# EUROPÄISCHE PATENTSCHRIFT

(11) **EP 3 747 152 B1**
(45) Veröffentlichungstag und Bekanntmachung des Hinweises auf die Patenterteilung: **07.12.2022**
(21) Anmeldenummer: 19704261.7
(22) Anmeldetag: 04.02.2019
(51) Int. Cl.: H04L 9/32

(54) **ÜBERTRAGEN EINER MIT PRÜFDATEN GESICHERTEN NACHRICHT**
TRANSMISSION OF A MESSAGE SECURED WITH CONTROLDATA
TRANSMISSION D'UN MESSAGE SÉCURISÉ AVEC DES DONNÉES DE CONTRÔLE

(30) Priorität: 01.03.2018 DE 102018203072
(43) Veröffentlichungstag der Anmeldung: 09.12.2020
(73) Patentinhaber: Siemens Mobility GmbH, 81739 München (DE)
(72) Erfinder: SEEMANN, Markus, 38106 Braunschweig (DE)
(86) Internationale Anmeldenummer: PCT/EP2019/052586
(87) Internationale Veröffentlichungsnummer: WO 2019/166182

(56) Entgegenhaltungen:
- DE-A1-102016 205 126
- US-A1- 2012 057 702
- "Chapter 9: ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 321 - 383 , 1. Oktober 1996 (1996-10-01), XP001525009, ISBN: 978-0-8493-8523-0 Gefunden im Internet: URL:http://www.cacr.math.uwaterloo.ca/hac/
- "EN 50129 Bahnanwendungen. Telekommunikationstechnik, Signaltechnik und Datenberarbeitungssysteme. Sicherheitsrelevante elektronische Systeme für Signaltechnik", EUROPAEISCHE NORM - EUROPEAN STANDARD - NORME EUROPEE, XX, XX, Bd. EN 50129, 1. Februar 2003 (2003-02-01) , Seiten 1-98, XP009112742,

## Beschreibung

Die Erfindung bezieht sich auf ein Verfahren zum gesicherten Übertragen einer Nachricht von einer Sendeeinrichtung zu einer Empfangseinrichtung, insbesondere ein solches Verfahren, das für den Einsatz in der Bahnautomatisierung beziehungsweise Signaltechnik sowie in der Schienenfahrzeugtechnik geeignet ist. Derartige Verfahren sind beispielsweise in den Druckschriften DE 10 2016 205 126 A1 und DE 100 11 887 A1 sowie in den Sicherheitsnormen EN 50129 und EN 50159 beschrieben.

Das Dokument "Chapter 9: ED - Menezes A J; Van Oorschot PC; Vanstone SA", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 321 - 383, 1. Oktober 1996, XP001525009, ISBN: 978-0-8493-8523-0, Gefunden im Internet: URL:http://www.cacr.math.uwaterloo.ca/hac/ beschreibt die Bedeutung von kryptographischen Hash-Funktionen in der modernen Kryptographie. Um Rechenzeit zu sparen, kann beispielsweise eine Nachricht unverschlüsselt versendet werden, wenn die zugehörige Hashfunktion verschlüsselt wird.

Dokument US 2012 057702 A1 betrifft eine Technik zur individuellen Kennzeichnung von Nachrichten, die über ein Interface in einem System empfangen wurden, so dass diese innerhalb des Systems nicht verändert werden können, ohne dass dies bemerkt werden würde.

Der Erfindung liegt die Aufgabe zugrunde, ein Verfahren und eine Anordnung zum gesicherten Übertragen einer Nachricht anzugeben, bei dem bekannte Sendeinrichtungen und Empfangseinrichtungen ohne Verschlüsselungsmöglichkeit modifiziert, insbesondere nachgerüstet werden, und dabei der Aufwand möglichst gering gehalten werden kann und die Nachricht selbst unverschlüsselt aber dennoch manipulationssicher übertragen werden kann, wie es in manchen Ländern aus gesetzlichen Gründen vorgeschrieben ist.

Diese Aufgabe wird erfindungsgemäß durch ein Verfahren mit den Merkmalen gemäß Patentanspruch 1 gelöst. Vorteilhafte Ausgestaltungen des Verfahrens sind in Unteransprüchen angegeben.

Danach ist vorgesehen, dass ein von der Sendeeinrichtung erzeugtes Telegramm, das die Nachricht und mit der Nachricht gebildete Prüfdaten umfasst, zu einer senderseitigen Zugriffsschutzeinrichtung übertragen wird. Die senderseitige Zugriffsschutzeinrichtung modifiziert dabei das Telegramm. Die senderseitige Zugriffsschutzeinrichtung übermittelt das modifizierte Telegramm anschließend über eine Verbindung, insbesondere ein potentiell unsicheres oder potentiell angreifbares Übertragungsmedium, zu einer empfängerseitigen Zugriffsschutzeinrichtung. Die empfängerseitige Zugriffsschutzeinrichtung bearbeitet das modifizierte Telegramm und leitet das bearbeitete Telegramm zu der Empfangseinrichtung weiter. Die Empfangseinrichtung überprüft das bearbeitete Telegramm anhand der darin enthaltenen Nachricht und der darin enthaltenen Prüfdaten und verwirft die Nachricht, wenn die Prüfdaten mit der Nachricht nicht korrelieren.

Erfindungsgemäß ist vorgesehen, dass die senderseitige Zugriffsschutzeinrichtung zusätzlich zur Sendeeinrichtung eingesetzt wird und eine Verbindung zwischen der Sendeeinrichtung und der senderseitigen Zugriffsschutzeinrichtung mit Blick auf Manipulationen sicherer als die erstgenannte Verbindung ausgeführt ist, wobei die senderseitige Zugriffsschutzeinrichtung das Telegramm modifiziert, indem sie die Prüfdaten insgesamt oder zumindest einen Teil der Prüfdaten, der einen von der Sendeeinrichtung mit der Nachricht (N) gebildeten Sicherheitscode enthält, mit einem geheimen Schlüssel unter Bildung von Kodierdaten verschlüsselt und
im Telegramm diejenigen Prüfdaten, die verschlüsselt worden sind, durch die Kodierdaten ersetzt, wobei die Nachricht im Telegramm unverschlüsselt erhalten bleibt,
die empfängerseitige Zugriffsschutzeinrichtung zusätzlich zur Empfangseinrichtung eingesetzt wird und eine Verbindung zwischen der empfängerseitigen Zugriffsschutzeinrichtung und der Empfangseinrichtung mit Blick auf Manipulationen sicherer als die erstgenannte Verbindung ausgeführt ist, wobei die empfängerseitige Zugriffsschutzeinrichtung das bearbeitete Telegramm bildet, indem
sie die Kodierdaten entschlüsselt und
die Kodierdaten im Telegramm durch die entschlüsselten Kodierdaten ersetzt.

Ein wesentlicher Vorteil des erfindungsgemäßen Verfahrens besteht darin, dass sich dieses auf der Basis bekannter Sendeeinrichtungen und Empfangseinrichtungen durchführen lässt, ohne dass diese dafür verändert oder modifiziert werden müssten; es kann also mit Blick auf die Sendeeinrichtung und die Empfangseinrichtungen auf bestehende bzw. bewährte Produkte zurückgegriffen werden. Konkret können beispielsweise Sendeeinrichtungen und Empfangseinrichtungen, die den Sicherheitsnormen EN 50129 und EN 50159 mit gewünschtem Sicherheitslevel genügen, eingesetzt werden, ohne deren Sicherheitseinstufung zu gefährden. Durch den erfindungsgemäßen Einsatz der zusätzlichen senderseitigen Zugriffsschutzeinrichtung und der zusätzlichen empfängerseitigen Zugriffsschutzeinrichtung wird die Sicherheit in der Nachrichtenübertragung erhöht.

Ein weiterer wesentlicher Vorteil des erfindungsgemäßen Verfahrens besteht darin, dass die eigentliche Nachricht im Telegramm unverschlüsselt erhalten bleibt, weil lediglich Prüfdaten verschlüsselt werden, so dass das Verfahren auch in solchen Ländern eingesetzt werden kann, in denen eine verschlüsselte Nachrichtenübertragung strengen rechtlichen Einschränkungen unterliegt.

Um einen Zugriff von außen bzw. von dem potentiell unsicheren oder potentiell angreifbaren Übertragungsmedium aus auf die Sendeeinrichtung zu verhindern oder zumindest zu erschweren, wird es als vorteilhaft angesehen, wenn zwischen der Sendeeinrichtung und der senderseitigen Zugriffsschutzeinrichtung keine logische Verbindung besteht und die senderseitige Zugriffsschutzeinrichtung lediglich dazu geeignet ist, Telegramme von der Sendeeinrichtung zu empfangen, zu modifizieren und die modifizierten Telegramme auszugeben.

Um einen Zugriff von außen bzw. von dem potentiell unsicheren oder potentiell angreifbaren Übertragungsmedium aus auf die Empfangseinrichtung zu verhindern oder zumindest zu erschweren, wird es als vorteilhaft angesehen, wenn zwischen der Empfangseinrichtung und der empfängerseitigen Zugriffsschutzeinrichtung keine logische Verbindung besteht und die empfängerseitige Zugriffsschutzeinrichtung lediglich geeignet ist, empfangene Telegramme zu bearbeiten und die bearbeiteten Telegramme weiterzuleiten.

Mit Blick auf eine zuverlässige Erkennung von Übertragungsfehlern oder Manipulationen wird es als vorteilhaft angesehen, wenn die senderseitige Zugriffsschutzeinrichtung vor der Verschlüsselung der Prüfdaten oder des zumindest einen Teils der Prüfdaten zusätzliche Prüfdaten hinzufügt und diese zusätzlichen Prüfdaten beim Bilden der Kodierdaten mit dem geheimen Schlüssel mitverschlüsselt, und die empfängerseitige Zugriffsschutzeinrichtung die Kodierdaten entschlüsselt und nach dem Entschlüsseln der Kodierdaten die darin enthaltenen zusätzlichen Prüfdaten auf Korrektheit prüft und das bearbeitete Telegramm ausschließlich dann an die Empfangseinrichtung weiterleitet, wenn die zusätzlichen Prüfdaten eine korrekte Datenübertragung anzeigen.

Alternativ oder zusätzlich kann - ebenfalls mit Blick auf eine zuverlässige Erkennung von Übertragungsfehlern oder Manipulationen - in vorteilhafter Weise vorgesehen werden, dass die senderseitige Zugriffsschutzeinrichtung vor oder nach der Verschlüsselung der Prüfdaten oder des zumindest einen Teils der Prüfdaten weitere Prüfdaten erzeugt, nämlich durch Verschlüsseln eines Teils des unmodifizierten Telegramms der Sendeeinrichtung mit einem weiteren geheimen Schlüssel, und die weiteren Prüfdaten als Teil des modifizierten Telegramms an die empfängerseitige Zugriffsschutzeinrichtung übermittelt und die empfängerseitige Zugriffsschutzeinrichtung die weiteren Prüfdaten auf Korrektheit prüft und das bearbeitete Telegramm ausschließlich dann an die Empfangseinrichtung weiterleitet, wenn die weiteren Prüfdaten eine korrekte Datenübertragung anzeigen.

Bei der letztgenannten Variante kann alternativ vorgesehen sein, dass die senderseitige Zugriffsschutzeinrichtung die weiteren Prüfdaten durch Verschlüsseln nicht nur eines Teiles des unmodifizierten Telegramms der Sendeeinrichtung, sondern des gesamten unmodifizierten Telegramms der Sendeeinrichtung mit dem weiteren geheimen Schlüssel erzeugt.

Bei einer besonders bevorzugten Variante ist vorgesehen, dass die senderseitige Zugriffsschutzeinrichtung vor der Verschlüsselung der Prüfdaten oder des zumindest einen Teils der Prüfdaten zusätzliche Prüfdaten hinzufügt und diese zusätzlichen Prüfdaten beim Bilden der Kodierdaten mit dem geheimen Schlüssel mitverschlüsselt, die senderseitige Zugriffsschutzeinrichtung vor oder nach der Bildung der Kodierdaten weitere Prüfdaten erzeugt, nämlich durch Verschlüsseln eines Teils des unmodifizierten Telegramms der Sendeeinrichtung mit einem weiteren geheimen Schlüssel, und die weiteren Prüfdaten als Teil des modifizierten Telegramms an die empfängerseitige Zugriffsschutzeinrichtung übermittelt, die empfängerseitige Zugriffsschutzeinrichtung die weiteren Prüfdaten auf Korrektheit prüft, die empfängerseitige Zugriffsschutzeinrichtung die Kodierdaten entschlüsselt und die zusätzlichen Prüfdaten auf Korrektheit prüft und die empfängerseitige Zugriffsschutzeinrichtung das bearbeitete Telegramm ausschließlich dann an die Empfangseinrichtung weiterleitet, wenn sowohl die weiteren als auch die zusätzlichen Prüfdaten eine korrekte Datenübertragung anzeigen. Die Reihenfolge der beschriebenen Prüfschritte ist dabei beliebig.

Bei einer anderen besonders bevorzugten Variante ist vorgesehen, dass die senderseitige Zugriffsschutzeinrichtung vor der Verschlüsselung der Prüfdaten oder des zumindest einen Teils der Prüfdaten zusätzliche Prüfdaten hinzufügt und diese zusätzlichen Prüfdaten beim Bilden der Kodierdaten mit dem geheimen Schlüssel mitverschlüsselt, die senderseitige Zugriffsschutzeinrichtung vor oder nach der Bildung der Kodierdaten weitere Prüfdaten erzeugt, nämlich durch Verschlüsseln des gesamten unmodifizierten Telegramms der Sendeeinrichtung mit einem weiteren geheimen Schlüssel, und die weiteren Prüfdaten als Teil des modifizierten Telegramms an die empfängerseitige Zugriffsschutzeinrichtung übermittelt, die empfängerseitige Zugriffsschutzeinrichtung die weiteren Prüfdaten auf Korrektheit prüft, die empfängerseitige Zugriffsschutzeinrichtung die Kodierdaten entschlüsselt und die zusätzlichen Prüfdaten auf Korrektheit prüft und die empfängerseitige Zugriffsschutzeinrichtung das bearbeitete Telegramm ausschließlich dann an die Empfangseinrichtung weiterleitet, wenn sowohl die weiteren als auch die zusätzlichen Prüfdaten eine korrekte Datenübertragung anzeigen. Die Reihenfolge der beschriebenen Prüfschritte ist dabei beliebig.

Die Sendeeinrichtung bildet den Sicherheitscode vorzugsweise derart, dass empfängerseitig eine Veränderung der im Telegramm durch Auswerten des Sicherheitscodes erkennbar ist.

Die Sendeeinrichtung und die Empfangseinrichtung weisen vorzugsweise jeweils ein Sicherheitslevel gemäß den Sicherheitsnormen EN 50129 und/oder EN 50159 von mindestens 1 auf.

Die Datenverbindung zwischen der Sendeeinrichtung und der senderseitigen Zugriffsschutzeinrichtung ist vorzugsweise zugriffsgeschützt und wird diesbzgl. als sicher betrachtet.

Die Datenverbindung zwischen der Empfangseinrichtung und der empfängerseitigen Zugriffsschutzeinrichtung ist vorzugsweise zugriffsgeschützt und wird diesbzgl. als sicher betrachtet. Besonders vorteilhaft ist das Verfahren im Bereich der Bahnautomatisierung beziehungsweise Signaltechnik sowie der Schienenfahrzeugtechnik.

Bei einer bevorzugten eisenbahnbezogenen Ausgestaltung des Verfahrens ist vorgesehen, dass die Nachricht von einer fahrzeug- oder streckenseitigen Einrichtung einer Eisenbahnsignalanlage zu einer anderen fahrzeug- oder streckenseitigen Einrichtung der Eisenbahnsignalanlage übertragen wird, wobei die Sendeeinrichtung und die senderseitige Zugriffsschutzeinrichtung sowie die Empfangseinrichtung und die empfängerseitige Zugriffsschutzeinrichtung in den fahrzeug- oder streckenseitigen Einrichtungen untergebracht sind.

Die Erfindung bezieht sich außerdem auf eine Anordnung mit einer Sendeeinrichtung, einer senderseitigen Zugriffsschutzeinrichtung, einer empfängerseitigen Zugriffsschutzeinrichtung und einer Empfangseinrichtung.

Bezüglich der Ausgestaltung und Vorteile der Anordnung sei auf die obigen Ausführungen im Zusammenhang mit dem erfindungsgemäßen Verfahren verwiesen.

Bei einer bevorzugten Ausgestaltung der Anordnung ist vorgesehen, dass die Sendeeinrichtung und die senderseitige Zugriffsschutzeinrichtung in einer fahrzeug- oder streckenseitigen Einrichtung einer Eisenbahnsignalanlage untergebracht sind und die Empfangseinrichtung und die empfängerseitige Zugriffsschutzeinrichtung in einer anderen fahrzeug- oder streckenseitigen Einrichtung der Eisenbahnsignalanlage.

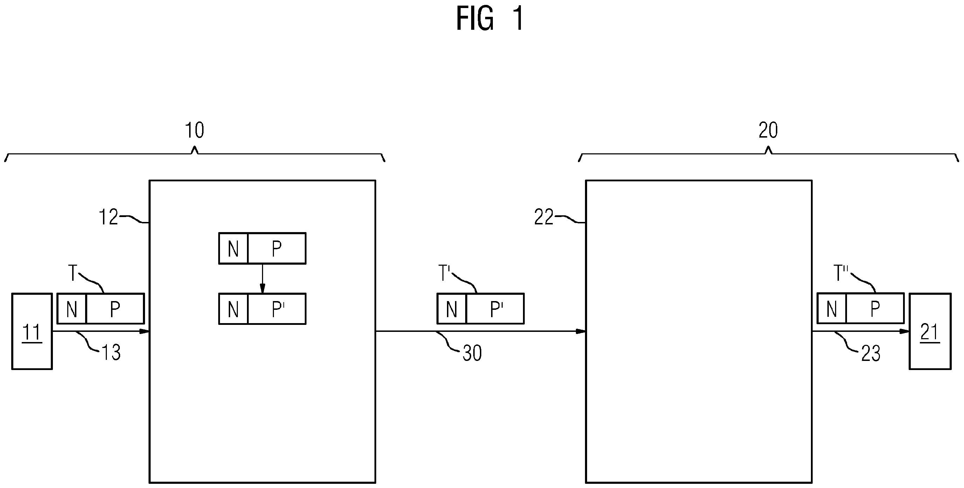

Die Erfindung wird nachfolgend anhand von Ausführungsbeispielen näher erläutert. Dabei zeigen Figuren 1 bis 6 beispielhaft Ausführungsbeispiele für verschiedene erfindungsgemäße Anordnungen, anhand derer Ausführungsbeispiele für das erfindungsgemäße Verfahren beschrieben werden. Konkret zeigen beispielhaft
- Figur 1: ein Ausführungsbeispiel für eine Anordnung, bei der eine senderseitige Zugriffsschutzeinrichtung die gesamten Prüfdaten verschlüsselt,
- Figur 2: ein Ausführungsbeispiel für eine Anordnung, bei der eine senderseitige Zugriffsschutzeinrichtung nur den Sicherheitscode in den Prüfdaten des Telegramms der Sendeeinrichtung verschlüsselt,
- Figur 3: ein Ausführungsbeispiel für eine Anordnung, bei der eine senderseitige Zugriffsschutzeinrichtung den Sicherheitscode sowie einen weiteren Teil der Prüfdaten des Telegramms der Sendeeinrichtung verschlüsselt,
- Figur 4: ein Ausführungsbeispiel für eine Anordnung, bei der eine senderseitige Zugriffsschutzeinrichtung den Sicherheitscode, einen weiteren Teil der Prüfdaten im Telegramm der Sendeeinrichtung sowie selbst hinzugefügte, zusätzliche Prüfdaten mit einem Schlüssel verschlüsselt,
- Figur 5: ein Ausführungsbeispiel für eine Anordnung, bei der eine senderseitige Zugriffsschutzeinrichtung den Sicherheitscode und einen weiteren Teil der Prüfdaten im Telegramm der Sendeeinrichtung mit einem ersten Schlüssel unter Bildung von Kodierdaten verschlüsselt und selbst mit einem zweiten Schlüssel weitere Prüfdaten bildet und hinzufügt, und
- Figur 6: ein Ausführungsbeispiel für eine Anordnung, bei der eine senderseitige Zugriffsschutzeinrichtung den Sicherheitscode, einen weiteren Teil der Prüfdaten im Telegramm der Sendeeinrichtung sowie selbst hinzugefügte, zusätzliche Prüfdaten mit einem ersten Schlüssel verschlüsselt und mit einem zweiten Schlüssel weitere Prüfdaten bildet und hinzufügt.

In den Figuren werden der Übersicht halber für identische oder vergleichbare Komponenten stets dieselben Bezugszeichen verwendet.

Die Figur 1 zeigt eine Anordnung mit einer Sendeseite 10, die eine Sendeeinrichtung 11 und eine senderseitige Zugriffsschutzeinrichtung 12 aufweist. Außerdem umfasst die Anordnung eine Empfangsseite 20, die eine Empfangseinrichtung 21 und eine empfängerseitige Zugriffsschutzeinrichtung 22 aufweist.

Nachfolgend wird beispielhaft davon ausgegangen, dass die Verbindung 13 zwischen der Sendeeinrichtung 11 und der senderseitigen Zugriffsschutzeinrichtung 21 sicher oder zumindest mit Blick auf Manipulationen sicherer als die Verbindung 30 zwischen der Sendeseite 10 und der Empfangsseite 20 ist. Auch wird beispielhaft davon ausgegangen, dass die Verbindung 23 zwischen der empfängerseitigen Zugriffsschutzeinrichtung 22 und der Empfangseinrichtung 21 sicher oder zumindest mit Blick auf Manipulationen sicherer als die Verbindung 30 zwischen der Sendeseite 10 und der Empfangseite 20 ist. Die Verbindung 30 kann durch ein potentiell unsicheres oder potentiell angreifbares Übertragungsmedium gebildet sein, beispielsweise durch ein Datennetzwerk wie beispielsweise das Internet.

Die Anordnung gemäß der Figur 1 wird zur Übertragung einer Nachricht N von der Sendeeinrichtung 11 zu der Empfangseinrichtung 21 beispielsweise wie folgt betrieben:
Die Sendeeinrichtung 11 erzeugt ein Telegramm T, das die Nachricht N und mit der Nachricht gebildete Prüfdaten P umfasst. Die Prüfdaten P können beispielsweise Prüfwerte und/oder Hashwerte umfassen, wie dies allgemein zum Beispiel aus den o. g. Druckschriften DE 10 2016 205 126 A1 und DE 100 11 887 A1 oder den Sicherheitsnormen EN 50129 und EN 50159 bekannt ist.

Die von der Sendeeinrichtung erzeugten Prüfdaten P enthalten vorzugsweise einen Sicherheitscode, der es empfängerseitig ermöglicht, eine Veränderung der im Telegramm T enthaltenen Nachricht N durch Auswertung des Sicherheitscodes zu erkennen. Außerdem enthalten die Prüfdaten P vorzugsweise eine Sequenznummer des Telegramms T, einen Zeitstempel des Telegramms T, eine Kennung der Sendeeinrichtung 11 und eine Kennung der Empfangseinrichtung 21.

Das Telegramm T wird von der Sendeeinrichtung 11 zu der senderseitigen Zugriffsschutzeinrichtung 12 übertragen. Die senderseitige Zugriffsschutzeinrichtung 12 modifiziert das Telegramm T unter Bildung eines modifizierten Telegramms T', indem sie die Prüfdaten P insgesamt mit einem geheimen Schlüssel unter Bildung von Kodierdaten P' verschlüsselt und im Telegramm T die Prüfdaten P durch die Kodierdaten P' ersetzt.

Anschließend übermittelt die senderseitige Zugriffsschutzeinrichtung 12 das modifizierte Telegramm T' über die Verbindung 30 zu der empfängerseitigen Zugriffsschutzeinrichtung 22. Die empfängerseitige Zugriffsschutzeinrichtung 22 bearbeitet das modifizierte Telegramm T'. Im Rahmen der Bearbeitung entschlüsselt sie die Kodierdaten P' mit einem zu dem geheimen Schlüssel der senderseitigen Zugriffsschutzeinrichtung 12 komplementären, beispielsweise öffentlichen, Schlüssel und bildet ein bearbeitetes Telegramm T'', indem sie die Kodierdaten P' durch die entschlüsselten Kodierdaten ersetzt.

Falls die Übertragung des Telegramms T' über die Verbindung 30 ungestört war, entsprechen die dekodierten bzw. entschlüsselten Kodierdaten den ursprünglichen Prüfdaten P im Telegramm T der Sendeeinrichtung 11; davon wird bei der Darstellung in Figur 1 beispielhaft ausgegangen.

Anschließend leitet die empfängerseitige Zugriffsschutzeinrichtung 22 das bearbeitete Telegramm T'' an die Empfangseinrichtung 21 weiter. Die Empfangseinrichtung 21 überprüft das bearbeitete Telegramm T'' anhand der darin enthaltenen Nachricht N und der darin enthaltenen Prüfdaten P und verwirft die Nachricht N, wenn die Prüfdaten P mit der Nachricht N nicht korrelieren. Falls die Nachricht N und die Prüfdaten P korrelieren bzw. inhaltlich zusammenpassen, wird die Nachricht N verwertet.

Die Empfangseinrichtung 21 kann das bearbeitete Telegramm T'' beispielsweise überprüfen, indem sie mit der Nachricht N eigene Prüfdaten bildet und diese mit den in dem bearbeiteten Telegramm T'' enthaltenen Prüfdaten P vergleicht: Stimmen die selbst gebildeten Prüfdaten und die in dem bearbeiteten Telegramm T'' enthaltenen Prüfdaten P überein, wird die Nachricht verwertet, andernfalls verworfen.

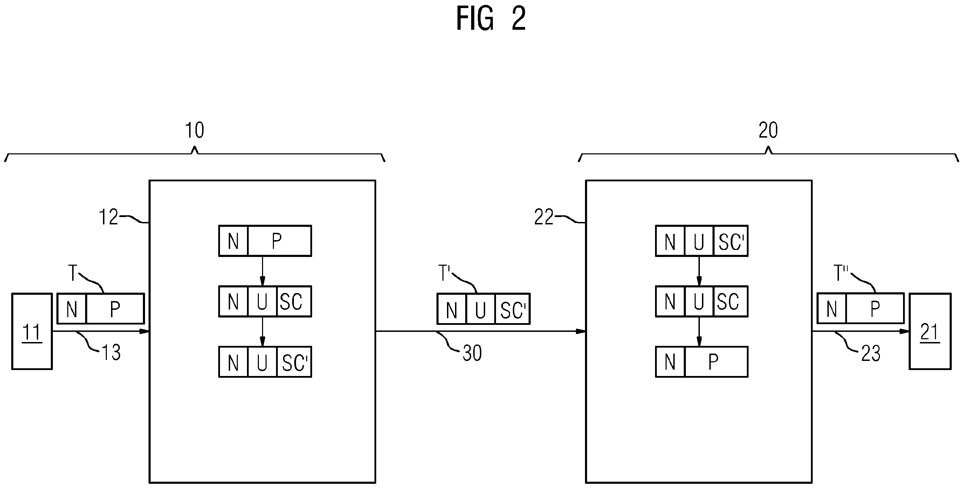

Die Figur 2 zeigt eine Anordnung, bei der die senderseitige Zugriffsschutzeinrichtung 12 das modifizierte T' bildet, indem sie von den Prüfdaten lediglich einen darin enthaltenen Sicherheitscode SC mit dem geheimen Schlüssel unter Bildung von Kodierdaten SC' verschlüsselt und im Telegramm T den Sicherheitscode SC durch die Kodierdaten SC' ersetzt. Die übrigen Prüfdaten U bleiben unverändert.

Die empfängerseitige Zugriffsschutzeinrichtung 22 entschlüsselt die Kodierdaten SC', ermittelt den Sicherheitscode SC und erzeugt das bearbeitete Telegramm T'', das zu der Empfangseinrichtung 21 übermittelt wird; diesbezüglich gelten die obigen Ausführungen im Zusammenhang mit der Figur 1 entsprechend.

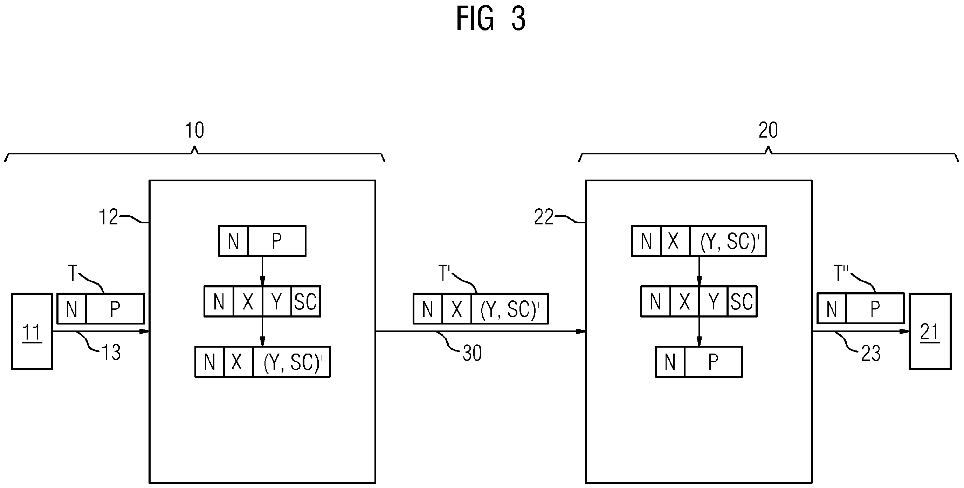

Die Figur 3 zeigt eine Anordnung, bei der die senderseitige Zugriffsschutzeinrichtung 12 das modifizierte T' bildet, indem sie von den Prüfdaten den Sicherheitscode SC und einen Teil Y ohne Sicherheitscode mit dem geheimen Schlüssel unter Bildung von Kodierdaten (Y,SC)' verschlüsselt und im Telegramm T diese durch die Kodierdaten (Y,SC)' ersetzt. Der andere Teil X der Prüfdaten bleibt unverschlüsselt.

Die empfängerseitige Zugriffsschutzeinrichtung 22 entschlüsselt die Kodierdaten (Y,SC)', ermittelt den Sicherheitscode SC und den Teil Y der Prüfdaten P und erzeugt das bearbeitete Telegramm T'', das zu der Empfangseinrichtung 21 übermittelt wird; diesbezüglich gelten die obigen Ausführungen im Zusammenhang mit der Figur 1 entsprechend.

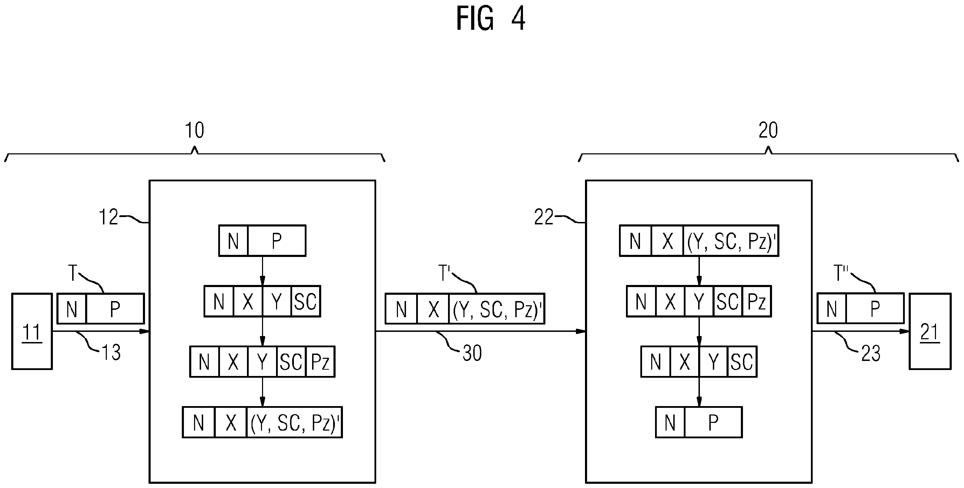

Die Figur 4 zeigt eine Anordnung, bei der die senderseitige Zugriffsschutzeinrichtung 12 das modifizierte Telegramm T' bildet, indem sie vor der Verschlüsselung des Teils Y der Prüfdaten P und des Sicherheitscodes SC zusätzliche Prüfdaten Pz hinzufügt und diese zusätzlichen Prüfdaten Pz beim Bilden der Kodierdaten (Y,SC,Pz)' mit dem geheimen Schlüssel mitverschlüsselt.

Die zusätzlichen Prüfdaten Pz können beispielsweise einen oder mehrere Hashwerte über das gesamte Telegramm T oder Teile des Telegramms T enthalten.

Die empfängerseitige Zugriffsschutzeinrichtung 22 entschlüsselt die Kodierdaten (Y,SC,Pz)'. Nach dem Entschlüsseln der Kodierdaten prüft sie die darin enthaltenen zusätzlichen Prüfdaten Pz auf Korrektheit und leitet das bearbeitete Telegramm T'' ausschließlich dann an die Empfangseinrichtung 21 weiter, wenn die zusätzlichen Prüfdaten Pz eine korrekte Datenübertragung anzeigen.

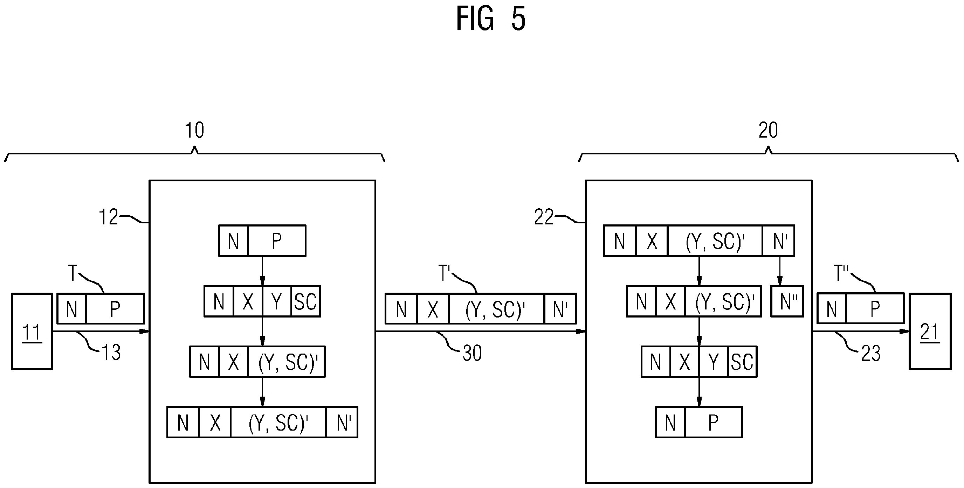

Die Figur 5 zeigt eine Anordnung, bei der die senderseitige Zugriffsschutzeinrichtung 12 das modifizierte T' bildet, indem sie vor oder nach der (auf einem ersten Schlüssel beruhenden) Verschlüsselung der Prüfdaten P oder eines Teils der Prüfdaten P, also vor oder nach der Bildung der Kodierdaten P' (siehe Figur 1), SC' (siehe Figur 2) oder - wie beispielhaft in der Figur 5 gezeigt - (Y,SC)' (siehe Figur 3) weitere Prüfdaten N' erzeugt, nämlich durch Verschlüsseln des gesamten unmodifizierten Telegramms T oder eines Teils des unmodifizierten Telegramms T, beispielsweise durch Verschlüsseln der Nachricht N im Telegramm T, mit einem weiteren (also einem zweiten) geheimen Schlüssel, der sich vorzugsweise von dem ersten Schlüssel unterscheidet.

Die weiteren Prüfdaten N' können beispielsweise einen oder mehrere Hashwerte über das gesamte Telegramm T oder Teile des Telegramms T enthalten. Die weiteren Prüfdaten N' können z. B. MAC (Message Authentication Code)-Werte enthalten.

Die empfängerseitige Zugriffsschutzeinrichtung 22 prüft die weiteren Prüfdaten N' auf Korrektheit. Die Prüfung auf Korrektheit kann beispielsweise dadurch erfolgen, dass die empfängerseitige Zugriffsschutzeinrichtung 22 - analog zur senderseitigen Zugriffsschutzeinrichtung 12 bzw. beispielsweise in derselben Art und Weise - mit dem entschlüsselten Telegramm T'' oder den entsprechenden Teilen des entschlüsselten Telegramms T'' eigene weitere Prüfdaten N' bildet. Anschließend vergleicht die empfängerseitige Zugriffsschutzeinrichtung 22 die eigenen weiteren Prüfdaten N' mit den empfangenen weiteren Prüfdaten N'. Stimmen die selbst gebildeten weiteren Prüfdaten N' mit den empfangenen weiteren Prüfdaten N' überein, wird auf eine korrekte Übertragung geschlossen. Das bearbeitete Telegramm T'' wird ausschließlich dann an die Empfangseinrichtung 21 weitergeleitet, wenn die weiteren Prüfdaten N' eine korrekte Datenübertragung anzeigen.

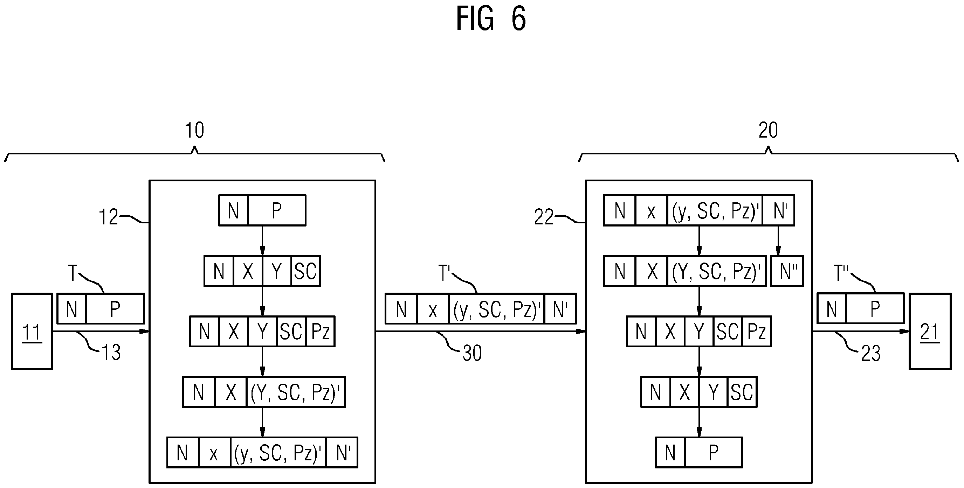

Die Figur 6 zeigt eine Anordnung, bei der die senderseitige Zugriffsschutzeinrichtung 12 das modifizierte Telegramm T' bildet, indem sie die Schritte sowohl gemäß der Ausführungsvariante gemäß Figur 4 als auch gemäß der Ausführungsvariante gemäß Figur 5 durchführt. Demgemäß fügt die senderseitige Zugriffsschutzeinrichtung 12 vor der Verschlüsselung der Prüfdaten P oder des zumindest einen Teils der Prüfdaten P zusätzliche Prüfdaten Pz hinzu und verschlüsselt diese zusätzlichen Prüfdaten Pz beim Bilden der Kodierdaten (Y,SC,PZ)' mit einem ersten geheimen Schlüssel.

Vor oder nach der Bildung der Kodierdaten (Y,SC,PZ)' erzeugt die senderseitige Zugriffsschutzeinrichtung 12 weitere Prüfdaten N', nämlich durch Verschlüsseln eines Teils des unmodifizierten Telegramms T der Sendeeinrichtung oder des gesamten unmodifizierten Telegramms T der Sendeeinrichtung mit einem weiteren (zweiten) geheimen Schlüssel. Die weiteren Prüfdaten N' werden als Teil des modifizierten Telegramms T' an die empfängerseitige Zugriffsschutzeinrichtung 22 übermittelt. Der zweite geheime Schlüssel unterscheidet sich vorzugsweise von dem ersten geheimen Schlüssel, mit dem die Kodierdaten (Y,SC,PZ)' gebildet werden.

Die empfängerseitige Zugriffsschutzeinrichtung 22 entschlüsselt die weiteren Prüfdaten N' und die Kodierdaten (Y,SC,Pz)' und prüft die weiteren Prüfdaten N'' und die zusätzlichen Prüfdaten Pz auf Korrektheit.

Die empfängerseitige Zugriffsschutzeinrichtung 22 leitet das bearbeitete bzw. entschlüsselte Telegramm T'' ausschließlich dann an die Empfangseinrichtung 21 weiter, wenn sowohl die entschlüsselten weiteren Prüfdaten N'' als auch die zusätzlichen Prüfdaten Pz eine korrekte Datenübertragung anzeigen.

Mit Blick auf eine sichere Nachrichtenübertragung wird es als vorteilhaft angesehen, wenn bei den Ausführungsbeispielen gemäß den Figuren 1 bis 6 die Sendeeinrichtung und die Empfangseinrichtung jeweils ein Sicherheitslevel gemäß den Sicherheitsnormen EN 50129 und/oder EN 50159 von mindestens 1 aufweisen.

Die Anordnungen gemäß den Figuren 1 bis 6 können in vorteilhafter Weise eingesetzt werden, um Nachrichten von einer fahrzeug- oder streckenseitigen Einrichtung einer Eisenbahnsignalanlage zu einer anderen fahrzeug- oder streckenseitigen Einrichtung der Eisenbahnsignalanlage zu übertragen. In diesem Falle ist es vorteilhaft, wenn die Sendeeinrichtung 11 und die senderseitige Zugriffsschutzeinrichtung 12 sowie die Empfangseinrichtung 21 und die empfängerseitige Zugriffsschutzeinrichtung 22 in den fahrzeug- oder streckenseitigen Einrichtungen untergebracht sind.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Übertragen einer Nachricht (N) von einer Sendeeinrichtung (11) zu einer Empfangseinrichtung (21), wobei
- ein von der einem Sicherheitslevel genügenden Sendeeinrichtung (11) erzeugtes Telegramm (T), das die Nachricht (N) und mit der Nachricht (N) gebildete Prüfdaten (P) umfasst, zu einer senderseitigen Zugriffsschutzeinrichtung (12) übertragen wird,
- die senderseitige Zugriffsschutzeinrichtung (12) das Telegramm (T) modifiziert und anschließend über eine Verbindung (30), insbesondere ein potentiell unsicheres oder potentiell angreifbares Übertragungsmedium, zu einer empfängerseitigen Zugriffsschutzeinrichtung (22) übermittelt,
- die empfängerseitige Zugriffsschutzeinrichtung (22) das modifizierte Telegramm (T') bearbeitet und das bearbeitete Telegramm (T'') zu der dem Sicherheitslevel der Sendeeinrichtung genügenden Empfangseinrichtung (21) weiterleitet und
- die Empfangseinrichtung (21) das bearbeitete Telegramm (T'') anhand der darin enthaltenen Nachricht (N) und der darin enthaltenen Prüfdaten (P) überprüft und die Nachricht (N) verwirft, wenn die Prüfdaten (P) mit der Nachricht (N) nicht korrelieren,
**dadurch gekennzeichnet, dass**
- die senderseitige Zugriffsschutzeinrichtung (12) zusätzlich zur Sendeeinrichtung (11) eingesetzt wird und eine Verbindung (13) zwischen der Sendeeinrichtung (11) und der senderseitigen Zugriffsschutzeinrichtung (12) mit Blick auf Manipulationen sicherer als die erstgenannte Verbindung (30) ausgeführt ist, wobei die senderseitige Zugriffsschutzeinrichtung (12) das Telegramm (T) modifiziert, indem
- sie die Prüfdaten (P) insgesamt oder zumindest einen Teil der Prüfdaten (P), der einen von der Sendeeinrichtung (11) mit der Nachricht (N) gebildeten Sicherheitscode (SC) enthält, mit einem geheimen Schlüssel unter Bildung von Kodierdaten (P', SC', (Y;SC) ') verschlüsselt und
- im Telegramm (T) diejenigen Prüfdaten (P), die verschlüsselt worden sind, durch die Kodierdaten (P', SC', (Y;SC)') ersetzt, wobei die Nachricht (N) im Telegramm (T) unverschlüsselt erhalten bleibt,
- die empfängerseitige Zugriffsschutzeinrichtung (22) zusätzlich zur Empfangseinrichtung (21) eingesetzt wird und eine Verbindung (23) zwischen der empfängerseitigen Zugriffsschutzeinrichtung (22) und der Empfangseinrichtung (21) mit Blick auf Manipulationen sicherer als die erstgenannte Verbindung (30) ausgeführt ist, wobei die empfängerseitige Zugriffsschutzeinrichtung (22) das bearbeitete Telegramm (T'') bildet, indem
- sie die Kodierdaten (P', SC', (Y;SC)') entschlüsselt und
- die Kodierdaten (P', SC', (Y;SC)') im Telegramm (T') durch die entschlüsselten Kodierdaten ersetzt.

2. Verfahren nach Anspruch 1,
**dadurch gekennzeichnet, dass**
- die senderseitige Zugriffsschutzeinrichtung (12) vor der Verschlüsselung der Prüfdaten (P) oder des zumindest einen Teils der Prüfdaten (P) zusätzliche Prüfdaten (Pz) hinzufügt und diese zusätzlichen Prüfdaten (Pz) beim Bilden der Kodierdaten ((Y,SC,Pz)') mit dem geheimen Schlüssel mitverschlüsselt, und
- die empfängerseitige Zugriffsschutzeinrichtung (22) die Kodierdaten ((Y,SC,Pz)') entschlüsselt und nach dem Entschlüsseln der Kodierdaten ((Y,SC,Pz)') die darin enthaltenen zusätzlichen Prüfdaten (Pz) auf Korrektheit prüft und das bearbeitete Telegramm (T'') ausschließlich dann an die Empfangseinrichtung (21) weiterleitet, wenn die zusätzlichen Prüfdaten (Pz) eine korrekte Datenübertragung anzeigen.

3. Verfahren nach einem der voranstehenden Ansprüche,
**dadurch gekennzeichnet, dass**
- die senderseitige Zugriffsschutzeinrichtung (12) vor oder nach der Verschlüsselung der Prüfdaten (P) oder des zumindest einen Teils der Prüfdaten (P) weitere Prüfdaten (N') erzeugt, nämlich durch Verschlüsseln eines Teils des unmodifizierten Telegramms (T) der Sendeeinrichtung (11) mit einem weiteren geheimen Schlüssel, und die weiteren Prüfdaten (N') als Teil des modifizierten Telegramms (T') an die empfängerseitige Zugriffsschutzeinrichtung (22) übermittelt und
- die empfängerseitige Zugriffsschutzeinrichtung (22) die weiteren Prüfdaten (N') auf Korrektheit prüft und das bearbeitete Telegramm (T'') ausschließlich dann an die Empfangseinrichtung (21) weiterleitet, wenn die weiteren Prüfdaten (N') eine korrekte Datenübertragung anzeigen.

4. Verfahren nach einem der voranstehenden Ansprüche 1 und 2, **dadurch gekennzeichnet, dass**
- die senderseitige Zugriffsschutzeinrichtung (12) vor oder nach der Verschlüsselung der Prüfdaten (P) oder des zumindest einen Teils der Prüfdaten (P) weitere Prüfdaten (N') erzeugt, nämlich durch Verschlüsseln des gesamten unmodifizierten Telegramms (T) der Sendeeinrichtung (11) mit einem weiteren geheimen Schlüssel, und die weiteren Prüfdaten (N') als Teil des modifizierten Telegramms (T') an die empfängerseitige Zugriffsschutzeinrichtung (22) übermittelt und
- die empfängerseitige Zugriffsschutzeinrichtung (22) die weiteren Prüfdaten (N') auf Korrektheit prüft und das bearbeitete Telegramm (T'') ausschließlich dann an die Empfangseinrichtung (21) weiterleitet, wenn die weiteren Prüfdaten (N') eine korrekte Datenübertragung anzeigen.

5. Verfahren nach einem der voranstehenden Ansprüche,
**dadurch gekennzeichnet, dass**
- die senderseitige Zugriffsschutzeinrichtung (12) vor der Verschlüsselung der Prüfdaten (P) oder des zumindest einen Teils der Prüfdaten (P) zusätzliche Prüfdaten (Pz) hinzufügt und diese zusätzlichen Prüfdaten (Pz) beim Bilden der Kodierdaten ((Y,SC,Pz) ') mit dem geheimen Schlüssel mitverschlüsselt,
- die senderseitige Zugriffsschutzeinrichtung (12) vor oder nach der Bildung der Kodierdaten ((Y,SC,Pz)') weitere Prüfdaten (N') erzeugt, nämlich durch Verschlüsseln eines Teils des unmodifizierten Telegramms (T) der Sendeeinrichtung (11) mit einem weiteren geheimen Schlüssel, und die weiteren Prüfdaten (N') als Teil des modifizierten Telegramms (T') an die empfängerseitige Zugriffsschutzeinrichtung (22) übermittelt,
- die empfängerseitige Zugriffsschutzeinrichtung (22) die weiteren Prüfdaten (N') auf Korrektheit prüft,
- die empfängerseitige Zugriffsschutzeinrichtung (22) die Kodierdaten ((Y,SC,Pz)') entschlüsselt und die zusätzlichen Prüfdaten (Pz) auf Korrektheit prüft und
- die empfängerseitige Zugriffsschutzeinrichtung (22) das bearbeitete Telegramm (T'') ausschließlich dann an die Empfangseinrichtung (21) weiterleitet, wenn sowohl die weiteren als auch die zusätzlichen Prüfdaten (N', Pz) eine korrekte Datenübertragung anzeigen.

6. Verfahren nach einem der voranstehenden Ansprüche,
**dadurch gekennzeichnet, dass**
- die senderseitige Zugriffsschutzeinrichtung (12) vor der Verschlüsselung der Prüfdaten (P) oder des zumindest einen Teils der Prüfdaten (P) zusätzliche Prüfdaten (Pz) hinzufügt und diese zusätzlichen Prüfdaten (Pz) beim Bilden der Kodierdaten ((Y,SC,Pz)') mit dem geheimen Schlüssel mitverschlüsselt,
- die senderseitige Zugriffsschutzeinrichtung (12) vor oder nach der Bildung der Kodierdaten ((Y,SC,Pz)') weitere Prüfdaten (N') erzeugt, nämlich durch Verschlüsseln des gesamten unmodifizierten Telegramms (T) der Sendeeinrichtung (11) mit einem weiteren geheimen Schlüssel, und die weiteren Prüfdaten (N') als Teil des modifizierten Telegramms (T') an die empfängerseitige Zugriffsschutzeinrichtung (22) übermittelt,
- die empfängerseitige Zugriffsschutzeinrichtung (22) die weiteren Prüfdaten (N') auf Korrektheit prüft,
- die empfängerseitige Zugriffsschutzeinrichtung (22) die Kodierdaten ((Y,SC,Pz)') entschlüsselt und die zusätzlichen Prüfdaten (Pz) auf Korrektheit prüft und
- die empfängerseitige Zugriffsschutzeinrichtung (22) das bearbeitete Telegramm (T'') ausschließlich dann an die Empfangseinrichtung (21) weiterleitet, wenn sowohl die weiteren als auch die zusätzlichen Prüfdaten (N', Pz) eine korrekte Datenübertragung anzeigen.

7. Verfahren nach einem der voranstehenden Ansprüche,
**dadurch gekennzeichnet, dass** die Sendeeinrichtung (11) den Sicherheitscode (SC) derart bildet, dass empfängerseitig eine Veränderung der im Telegramm (T) enthaltenen Nachricht (N) durch Auswertung des Sicherheitscodes erkennbar ist.

8. Verfahren nach einem der voranstehenden Ansprüche,
**dadurch gekennzeichnet, dass** die von der Sendeeinrichtung (11) erzeugten Prüfdaten (P) neben dem Sicherheitscode (SC) zumindest eine der folgenden nachrichtenunabhängigen Informationen enthält:
- eine Sequenznummer des Telegramms (T),
- einen Zeitstempel des Telegramms (T),
- eine Kennung der Sendeeinrichtung (11),
- eine Kennung der Empfangseinrichtung (21).

9. Verfahren nach einem der voranstehenden Ansprüche,
**dadurch gekennzeichnet, dass** die Sendeeinrichtung (11) und die Empfangseinrichtung (21) jeweils ein Sicherheitslevel gemäß den Sicherheitsnormen EN 50129 und/oder EN 50159 von mindestens 1 aufweisen.

10. Verfahren nach einem der voranstehenden Ansprüche,
**dadurch gekennzeichnet, dass**
- die Datenverbindung (13) zwischen der Sendeeinrichtung (11) und der senderseitigen Zugriffsschutzeinrichtung (12)
- zugriffsgeschützt ist und diesbezüglich als sicher betrachtet wird und
- die Datenverbindung (23) zwischen der Empfangseinrichtung (21) und der empfängerseitigen Zugriffsschutzeinrichtung (22) zugriffsgeschützt ist und diesbezüglich als sicher betrachtet wird.

11. Verfahren nach einem der voranstehenden Ansprüche,
**dadurch gekennzeichnet, dass** zwischen der Sendeeinrichtung (11) und der senderseitigen Zugriffsschutzeinrichtung (12) keine logische Verbindung besteht und die senderseitige Zugriffsschutzeinrichtung (12) lediglich dazu geeignet ist, Telegramme (T) von der Sendeeinrichtung (11) zu empfangen, diese zu modifizieren und die modifizierten Telegramme (T') auszugeben.

12. Verfahren nach einem der voranstehenden Ansprüche,
**dadurch gekennzeichnet, dass** zwischen der Empfangseinrichtung (21) und der empfängerseitigen Zugriffsschutzeinrichtung (22) keine logische Verbindung besteht und die empfängerseitige Zugriffsschutzeinrichtung (22) lediglich geeignet ist, empfangene Telegramme (T') zu bearbeiten und die bearbeiteten Telegramme (T'') auszugeben.

13. Verfahren nach einem der voranstehenden Ansprüche,
**dadurch gekennzeichnet, dass**
- die Nachricht (N) von einer fahrzeug- oder streckenseitigen Einrichtung einer Eisenbahnsignalanlage zu einer anderen fahrzeug- oder streckenseitigen Einrichtung der Eisenbahnsignalanlage übertragen wird,
- wobei die Sendeeinrichtung (11) und die senderseitige Zugriffsschutzeinrichtung (12) sowie die Empfangseinrichtung (21) und die empfängerseitige Zugriffsschutzeinrichtung (22) in den fahrzeug- oder streckenseitigen Einrichtungen untergebracht sind.

14. Anordnung mit einer Sendeeinrichtung (11), einer senderseitigen Zugriffsschutzeinrichtung (12), einer empfängerseitigen Zugriffsschutzeinrichtung (22) und einer Empfangseinrichtung (21),
wobei
- die einem Sicherheitslevel genügende Sendeeinrichtung (11) dazu ausgebildet ist, ein von der Sendeeinrichtung (11) erzeugtes Telegramm (T), das die Nachricht (N) und mit der Nachricht (N) gebildete Prüfdaten (P) umfasst, zu der senderseitigen Zugriffsschutzeinrichtung (12) zu übertragen,
- die senderseitige Zugriffsschutzeinrichtung (12) außerdem dazu ausgebildet ist, das Telegramm (T) zu modifizieren und das modifizierte Telegramm (T') anschließend über eine Verbindung (30), insbesondere ein potentiell unsicheres oder potentiell angreifbares Übertragungsmedium, zu der empfängerseitigen Zugriffsschutzeinrichtung (22) zu übermitteln,
- die empfängerseitige Zugriffsschutzeinrichtung (22) dazu ausgebildet ist, das modifizierte Telegramm (T') zu bearbeiten, und
- die dem Sicherheitslevel der Sendeeinrichtung genügende Empfangseinrichtung (21) dazu ausgebildet ist, das bearbeitete Telegramm (T'') anhand der darin enthaltenen Nachricht (N) und der darin enthaltenen Prüfdaten (P) zu überprüfen und die Nachricht (N) zu verwerfen, wenn die Prüfdaten (P) mit der Nachricht (N) nicht korrelieren, **dadurch gekennzeichnet, dass**
- die senderseitige Zugriffsschutzeinrichtung (12) zusätzlich zur Sendeeinrichtung (11) eingesetzt ist und eine Verbindung (13) zwischen der Sendeeinrichtung (11) und der senderseitigen Zugriffsschutzeinrichtung (12) mit Blick auf Manipulationen sicherer als die erstgenannte Verbindung (30) ausgeführt ist, wobei die senderseitige Zugriffsschutzeinrichtung dazu ausgebildet ist, das Telegramm (T) zu modifizieren, indem
- sie die Prüfdaten (P) insgesamt oder zumindest einen Teil der Prüfdaten (P), der einen von der Sendeeinrichtung (11) mit der Nachricht (N) gebildeten Sicherheitscode (SC) enthält, mit einem geheimen Schlüssel unter Bildung von Kodierdaten (P', SC', (Y;SC) ') verschlüsselt und
- im Telegramm (T) diejenigen Prüfdaten (P), die verschlüsselt worden sind, durch die Kodierdaten (P', SC', (Y;SC)') ersetzt, wobei die Nachricht (N) im Telegramm (T) unverschlüsselt erhalten bleibt, und
- die empfängerseitige Zugriffsschutzeinrichtung (22) zusätzlich zur Empfangseinrichtung (21) eingesetzt ist und eine Verbindung (23) zwischen der empfängerseitigen Zugriffsschutzeinrichtung (22) und der Empfangseinrichtung (21) mit Blick auf Manipulationen sicherer als die erstgenannte Verbindung (30) ausgeführt ist, wobei die empfängerseitige Zugriffsschutzeinrichtung (22) dazu ausgebildet ist, das modifizierte Telegramm (T') zu bearbeiten, indem
- sie die Kodierdaten (P', SC', (Y;SC)') entschlüsselt und
- die Kodierdaten (P', SC', (Y;SC)') im Telegramm (T') durch die entschlüsselten Kodierdaten (P', SC', (Y;SC)') ersetzt, und das bearbeitete Telegramm (T'') zu der Empfangseinrichtung (21) weiterzuleiten.

## Claims

1. Method for transmitting a message (N) from a transmitter (11) to a receiver (21),
wherein
- a telegram (T) generated by the transmitter (11) that satisfies the safety level, which telegram (T) comprises the message (N) and the check data (P) formed with the message (N), is transferred to a transmitter-side access protection device (12),
- the transmitter-side access protection device (12) modifies the telegram (T) and then transmits it over a connection (30), in particular a potentially insecure or potentially vulnerable transmission medium, to a receiver-side access protection device (22),
- the receiver-side access protection device (22) processes the modified telegram (T') and forwards the processed telegram (T'') to the receiver (21) that satisfies the safety level of the transmitter and
- the receiver (21) verifies the processed telegram (T'') on the basis of the message (N) contained therein and the check data (P) contained therein and rejects the message (N) if the check data (P) does not correlate with the message (N),
**characterised in that**
- the transmitter-side access protection device (12) is used in addition to the transmitter (11) and a connection (13) between the transmitter (11) and the transmitter-side access protection device (12) is implemented as more secure, with regard to manipulations, than the first-mentioned connection (30), wherein the transmitter-side access protection device (12) modifies the telegram (T) by
- encrypting the check data (P) as a whole or at least a part of the check data (P), which contains a security code (SC) formed with the message (N) by the transmitter (11), using a secret key forming coded data (P', SC', (Y;SC)'), and
- in the telegram (T) replacing the check data (P), which has been encrypted, with the coded data (P', SC', (Y;SC)'), wherein the message (N) remains unencrypted in the telegram (T),
- the receiver-side access protection device (22) is used in addition to the receiver (21) and a connection (23) between the receiver-side access protection device (22) and the receiver (21) is implemented as more secure, with regard to manipulations, than the first-mentioned connection (30), wherein the receiver-side access protection device (22) forms the processed telegram (T'') by
- encrypting the coded data (P', SC, (Y;SC)') and
- replacing the coded data (P', SC', (Y;SC)') in the telegram (T') with the encrypted coded data.

2. Method according to claim 1,
**characterised in that**
- before the encryption of the check data (P) or at least a part of the check data (P), the transmitter-side access protection device (12) adds additional check data (Pz) and also encrypts this additional check data (Pz) using the secret key when forming the coded data ((Y,SC,Pz)'), and
- the receiver-side access protection device (22) encrypts the coded data ((Y,SC,Pz)') and after encrypting the coded data ((Y,SC,Pz)'), verifies the additional check data (Pz) contained therein for correctness and forwards the processed telegram (T'') to the receiver (21) only if the additional check data (Pz) indicates correct data transmission.

3. Method according to one of the preceding claims,
**characterised in that**
- before or after decrypting the check data (P) or at least a part of the check data (P), the transmitter-side access protection device (12) generates further check data (N'), namely by encrypting part of the unmodified telegram (T) of the transmitter (11) using a further secret key, and transmits the further check data (N') as part of the modified telegram (T') to the access protection device (22) on the receiver side and
- the receiver-side access protection device (22) verifies the further check data (N') for correctness and forwards the processed telegram (T'') to the receiver (21) only if the further check data (N') indicates correct data transmission.

4. Method according to one of the preceding claims 1 and 2, **characterisedin that**
- before or after encrypting the check data (P) or at least a part of the check data (P), the transmitter-side access protection device (12) generates further check data (N'), namely by encrypting the entire unmodified telegram (T) of the transmitter (11) using a further secret key, and transmits the further check data (N') as part of the modified telegram (T') to the receiver-side access protection device (22) and
- the receiver-side access protection device (22) verifies the further check data (N') for correctness and forwards the processed telegram (T'') to the receiver (21) only if the further check data (N') indicates correct data transmission.

5. Method according to one of the preceding claims,
**characterised in that**
- before encrypting the check data (P) or at least a part of the check data (P), the transmitter-side access protection device (12) adds additional check data (Pz) and also encrypts this additional check data (Pz) using the secret key when forming the coded data ((Y,SC,Pz)'),
- before or after forming the coded data ((Y,SC,Pz)'), the transmitter-side access protection device (12) generates further check data (N'), namely by encrypting part of the unmodified telegram (T) of the transmitter (11) using a further secret key, and transmits the further check data (N') as part of the modified telegram (T') to the receiver-side access protection device (22),
- the receiver-side access protection device (22) verifies the further check data (N') for correctness,
- the receiver-side access protection device (22) decrypts the coded data ((Y,SC,Pz)') and verifies the additional check data (Pz) for correctness and
- the receiver-side access protection device (22) forwards the processed telegram (T'') to the receiver (21) only if both the further and the additional check data (N', Pz) indicate correct data transmission.

6. Method according to one of the preceding claims,
**characterised in that**
- before encrypting the check data (P) or at least a part of the check data (P), the transmitter-side access protection device (12) adds additional check data (Pz) and also encrypts the additional check data (Pz) using the secret key when forming the coded data ((Y,SC,Pz)'),
- before or after forming the coded data ((Y,SC,Pz)') the transmitter-side access protection device (12) generates further check data (N'), namely by encrypting the entire unmodified telegram (T) of the transmitter (11) using a further secret key, and forwards the further check data (N') as part of the modified telegram (T') to the receiver-side access protection device (22),
- the receiver-side access protection device (22) verifies the further check data (N') for correctness,
- the receiver-side access protection device (22) decrypts the coded data ((Y,SC,Pz)') and verifies the additional check data (Pz) for correctness and
- the receiver-side access protection device (22) forwards the processed telegram (T'') to the receiver (21) only if both the further and the additional check data (N', Pz) indicate correct data transmission.

7. Method according to one of the preceding claims,
**characterised in that**
the transmitter (11) forms the security code (SC) in such a way that a change in the message (N) contained in the telegram (T) can be identified on the receiver side by evaluating the security code.

8. Method according to one of the preceding claims,
**characterised in that**
in addition to the security code (SC), the check data (P) generated by the transmitter (11) contains at least one of the following items of message-independent information:
- a sequence number of the telegram (T),
- a timestamp of the telegram (T),
- an identifier of the transmitter (11),
- an identifier of the receiver (21).

9. Method according to one of the preceding claims,
**characterised in that**
the transmitter (11) and the receiver (21) each have a safety level of at least 1 in accordance with the safety standards EN 50129 and/or EN 50159.

10. Method according to one of the preceding claims,
**characterised in that**
- the data connection (13) between the transmitter (11) and the transmitter-side access protection device (12) is access-protected and is considered safe in this regard and
- the data connection (23) between the receiver (21) and the receiver-side access protection device (22) is access-protected and is considered safe in this regard.

11. Method according to one of the preceding claims,
**characterised in that**
there is no logical connection between the transmitter (11) and the transmitter-side access protection device (12) and the transmitter-side access protection device (12) is only suitable for receiving telegrams (T) from the transmitter (11), modifying these and outputting the modified telegrams (T').

12. Method according to one of the preceding claims,
**characterised in that**
there is no logical connection between the receiver (21) and the receiver-side access protection device (22) and the receiver-side access protection device (22) is only suitable for processing received telegrams (T') and outputting the processed telegrams (T'').

13. Method according to one of the preceding claims,
**characterised in that**
- the message (N) is transmitted by one vehicle-side or track-side device of a railway signalling system to another vehicle-side or track-side device of the railway signalling system,
- wherein the transmitter (11) and the transmitter-side access protection device (12) as well as the receiver (21) and the receiver-side access protection device (22) are accommodated in the vehicle-side or track-side devices.

14. Arrangement with a transmitter (11), a transmitter-side access protection device (12), a receiver-side access protection device (22) and a receiver (21),
wherein
- the transmitter (11) that satisfies a safety level is designed to transmit a telegram (T) generated by the transmitter (11), comprising the message (N) and check data (P) formed with the message (N), to the transmitter-side access protection device (12),
- the transmitter-side access protection device (12) is additionally designed to modify the telegram (T) and to then transmit the modified telegram (T') over a connection (30), in particular a potentially insecure or potentially vulnerable transmission medium, to the receiver-side access protection device (22),
- the receiver-side access protection device (22) is designed to process the modified telegram (T'), and
- the receiver (21) that satisfies the safety level of the transmitter is designed to verify the processed telegram (T'') on the basis of the message (N) contained therein and the check data (P) contained therein and to reject the message (N) if the check data (P) does not correlate with the message (N),
**characterised in that**
- the transmitter-side access protection device (12) is used in addition to the transmitter (11) and a connection (13) between the transmitter (11) and the transmitter-side access protection device (12) is implemented as more secure, with regard to manipulations, than the first-mentioned connection (30), wherein the transmitter-side access protection device is designed to modify the telegram (T) by
- encrypting all the check data (P) or at least a part of the check data (P) which contains a security code (SC) formed by the transmitter (11) with the message (N), using a secret key forming coded data (P', SC', (Y;SC)') and,
- in the telegram (T) replacing the check data (P), which has been encrypted, with the coded data (P', SC', (Y;SC)'), wherein the message (N) remains unencrypted in the telegram (T), and
- the receiver-side access protection device (22) is used in addition to the receiver (21) and a connection (23) between the receiver-side access protection device (22) and the receiver (21) is implemented as more secure, with regard to manipulations, than the first-mentioned connection (30), wherein the receiver-side access protection device (22) is designed to process the modified telegram (T') by
- decrypting the coded data (P', SC', (Y;SC)') and
- replacing the coded data (P', SC', (Y;SC)') in the telegram (T') with the decrypted coded data (P', SC', (Y;SC)'), and forwarding the processed telegram (T'') to the receiver (21).

## Revendications

1. Procédé de transmission d'un message (N) d'un dispositif (11) d'émission à un dispositif (21) de réception, dans lequel
- on transmet, à un dispositif (12) de protection d'accès du côté de l'émetteur, un télégramme (T), qui est produit par le dispositif (11) d'émission en satisfaisant un niveau de sécurité et qui comprend le message (N) et des données (P) de contrôle formées avec le message (N),
- le dispositif (12) de protection d'accès du côté de l'émetteur modifie le télégramme (T) et ensuite le transmet à un dispositif (22) de protection d'accès du côté du récepteur par l'intermédiaire d'une liaison (30), notamment d'un support de transmission potentiellement non sécurisé ou potentiellement attaquable,
- le dispositif (22) de protection d'accès du côté du récepteur traite le télégramme (T') modifié et achemine le télégramme (T'') traité au dispositif (21) de réception satisfaisant le niveau de sécurité du dispositif d'émission et
- le dispositif (21) de réception contrôle le télégramme (T'') traité à l'aide du message (N), qui y est contenu, et des données (P) de contrôle, qui y sont contenues, et rejette le message (N), si les données (P) de contrôle ne sont pas corrélées au message (N),
**caractérisé en ce que**
- on utilise le dispositif (12) de protection d'accès du côté de l'émetteur supplémentairement au dispositif (11) d'émission et il est réalisé une liaison (13) entre le dispositif (11) d'émission et le dispositif (12) de protection d'accès du côté de l'émission, d'une manière plus sûre vis-à-vis de manipulations que la liaison (30) mentionnée en premier, dans lequel le dispositif (12) de protection d'accès du côté de l'émetteur modifie le télégramme (T) en
- chiffrant, par une clé secrète avec formation de données (P', SC', (Y ; SC)') de codage, les données (P) de contrôle dans l'ensemble ou au moins une partie des données (P) de contrôle, qui contient un code (SC) de sécurité formé avec le message (N) par le dispositif (11) d'émission
- et en remplaçant, dans le télégramme (T), les données (P) de contrôle, qui ont été chiffrées par les données (P', SC', (Y ; SC)') de codage, le message (N) restant non chiffré dans le télégramme (T),
- on utilise le dispositif (22) de protection d'accès du côté de l'émetteur supplémentairement au dispositif (21) de réception et une liaison (23) entre le dispositif (22) de protection d'accès du côté du récepteur et le dispositif (21) de réception est réalisée d'une manière plus sûre vis-à-vis de manipulations que la liaison (30) mentionnée en premier, le dispositif (22) de protection d'accès du côté du récepteur formant le télégramme (T'') traité en
- déchiffrant les données (P', SC', (Y ; SC)') de codage et
- remplaçant les données (P', SC', (Y ; SC)') de codage dans le télégramme (T') par les données de codage déchiffrées.

2. Procédé suivant la revendication 1,
**caractérisé en ce que**
- le dispositif (12) de protection d'accès du côté de l'émetteur ajoute, avant le chiffrement des données (P) de contrôle ou de la au moins une partie des données (P) de contrôle, des données (Pz) de contrôle supplémentaires et chiffre, par la clé secrète, ces données (Pz) de contrôle supplémentaires, lors de la formation des données ((Y, SC, Pz)') de codage, et
- le dispositif (22) de protection d'accès du côté du récepteur déchiffre les données ((Y, SC, Pz)') de codage et, après le déchiffrement des données ((Y, SC, Pz)') de codage, contrôle la correction des données (Pz) de contrôle supplémentaires, qui y sont contenues, et achemine le télégramme (T'') traité au dispositif (21) de réception, seulement si les données (Pz) de contrôle supplémentaires indiquent une transmission correcte de données.

3. Procédé suivant l'une des revendications précédentes, **caractérisé en ce que**
- le dispositif (12) de protection d'accès du côté de l'émetteur produit, avant ou après le chiffrement des données (P) de contrôle ou de la au moins une partie des données (P) de contrôle, d'autres données (N') de contrôle, à savoir par chiffrement d'une partie du télégramme (T) non modifié du dispositif (11) d'émission par une autre clé secrète et transmet les autres données (N') de contrôle comme partie du télégramme (T') modifié au dispositif (22) de protection d'accès du côté du récepteur et
- le dispositif (22) de protection d'accès du côté du récepteur contrôle la correction des autres données (N') de contrôle et achemine le télégramme (T'') traité au dispositif (21) de réception, seulement si les autres données (N') de contrôle indiquent une transmission correcte de données.

4. Procédé suivant l'une des revendications 1 et 2 précédentes, **caractérisé en ce que**
- le dispositif (12) de protection d'accès du côté du côté de l'émetteur produit, avant ou après le chiffrement des données (P) de contrôle ou de la au moins une partie des données (P) de contrôle, d'autres données (N') de contrôle, à savoir par chiffrement de l'ensemble du télégramme (T) non modifié du dispositif (11) d'émission par une autre clé secrète et transmet les autres données (N') de contrôle comme partie du télégramme (T') modifié au dispositif (22) de protection d'accès du côté du récepteur, et
- le dispositif (22) de contrôle d'accès du côté du récepteur contrôle la correction des autres données (N') de contrôle et achemine le télégramme (T'') traité au dispositif (21) de réception, seulement si les autres données (N') de contrôle indiquent une transmission correcte des données.

5. Procédé suivant l'une des revendications précédentes, **caractérisé en ce que**
- le dispositif (12) de protection d'accès du côté de l'émetteur ajoute, avant le chiffrement des données (P) de contrôle ou de 1 au moins une partie des données (P) de contrôle, des données (Pz) de contrôle supplémentaires et chiffre ces données (Pz) de contrôle supplémentaires par la clé secrète, lors de la formation des données ((Y, SC, Pz)') de codage,
- le dispositif (12) de protection d'accès du côté de l'émetteur produit, avant ou après la formation des données ((Y, SC, Pz)') de codage, d'autres données (N') de contrôle, à savoir par chiffrement d'une partie du télégramme (T) non modifié du dispositif (11) d'émission par une autre clé secrète et transmet les autres données (N') de contrôle comme partie du télégramme (T') modifié au dispositif (22) de protection d'accès du côté du récepteur,
- le dispositif (22) de protection d'accès du côté du récepteur contrôle la correction des autres (N') de contrôle,
- le dispositif (22) de protection d'accès du côté du récepteur déchiffre les données ((Y, SC, Pz)') de codage et contrôle la correction des données (Pz) de contrôle supplémentaires et
- le dispositif (22) de protection d'accès du côté du récepteur achemine le télégramme (T'') traité au dispositif (21) de réception, seulement si à la fois les autres et les données (N' , Pz) de contrôle supplémentaires indiquent une transmission correcte des données.

6. Procédé suivant l'une des revendications précédentes, **caractérisé en ce que**
- le dispositif (12) de protection d'accès du côté de l'émetteur ajoute, avant le chiffrement des données (P) de contrôle ou de la au moins une partie des données (P) de contrôle, des données (Pz) de contrôle supplémentaires, et chiffre par la clé secrète ces données (Pz) de contrôle supplémentaires à la formation des données ((Y, SC, Pz)') de codage,
- le dispositif (12) de protection d'accès du côté de l'émetteur produit, avant ou après la formation des données ((Y, SC, Pz)') de codage, d'autres données (N') de contrôle, à savoir par chiffrement de l'ensemble du télégramme (T) non modifié du dispositif (11) d'émission par une autre clé secrète et transmet les autres données (N') de contrôle comme partie du télégramme (T') modifié au dispositif (22) de protection d'accès du côté du récepteur,
- le dispositif (22) de protection d'accès du côté du récepteur contrôle la correction des autres données (N') de contrôle,
- le dispositif (22) de protection d'accès du côté du récepteur déchiffre des données ((Y, SC, Pz)') de codage et contrôle la correction des données (Pz) de contrôle supplémentaires,
- le dispositif (22) de protection d'accès du côté du récepteur achemine le télégramme (T'') traité au dispositif (21) de réception, seulement si à la fois les autres et les données (N', Pz) de contrôle supplémentaires indiquent une transmission correcte des données.

7. Procédé suivant l'une des revendications précédentes, **caractérisé en ce que**
le dispositif (11) d'émission forme le code (SC) de sécurité, de manière à pouvoir, du côté du récepteur, reconnaître une modification du message (N) contenu dans le télégramme (T) en analysant le code de sécurité.

8. Procédé suivant l'une des revendications précédentes, **caractérisé en ce que**
les données (P) de contrôle produites par le dispositif (11) d'émission contiennent, outre le code (SC) de sécurité, au moins l'une des informations suivantes indépendantes du message :
- un numéro de séquence du télégramme (T),
- un horodatage du télégramme (T),
- une caractérisation du dispositif (11) d'émission,
- une caractérisation du dispositif (21) de réception.

9. Procédé suivant l'une des revendications précédentes, **caractérisé en ce que**
le dispositif (11) d'émission et le dispositif (21) de réception ont chacun un niveau de sécurité d'au moins 1 suivant les normes de sécurité EN 50129 et/ou EN 50159.

10. Procédé suivant l'une des revendications précédentes, **caractérisé en ce que**
- la liaison (13) de données entre le dispositif (11) d'émission et le dispositif (12) de protection d'accès du côté de l'émetteur est protégée vis-à-vis d'accès et on la considère en conséquence comme sécurisée, et
- la liaison (23) de données entre le dispositif (21) de réception et le dispositif (22) de protection d'accès du récepteur est protégée vis-à-vis d'accès et on la considère en conséquence comme sécurisée.

11. Procédé l'une des revendications précédentes,
**caractérisé en ce qu'**
il n'y a pas de liaison logique entre le dispositif (11) d'émission et le dispositif (12) de protection d'accès du côté de l'émetteur et le dispositif (12) de protection d'accès du côté de l'émetteur convient simplement pour recevoir des télégrammes (T) du dispositif (11) d'émission, les modifier et émettre les télégrammes (T') modifiés.

12. Procédé suivant l'une des revendications précédentes, **caractérisé en ce qu'**
il n'y a pas de liaison logique entre le dispositif (21) de réception et le dispositif (22) de protection d'accès du côté du récepteur et le dispositif (22) de protection d'accès du côté du récepteur convient simplement pour traiter des télégrammes (T') reçus et émettre les télégrammes (T'') traités.

13. Procédé suivant l'une des revendications précédentes, **caractérisé en ce que**
- on transmet le message (N) d'un dispositif embarqué sur un véhicule ou de voie d'une installation de signalisation de voie ferrée à un autre dispositif embarqué sur un véhicule ou de voie de l'installation de signalisation de voie ferrée,
- dans lequel le dispositif (11) d'émission et le dispositif (12) de protection d'accès du côté de l'émetteur, ainsi que le dispositif (21) de réception et le dispositif (22) de protection d'accès du côté du récepteur sont logés dans les dispositifs embarqués sur le véhicule ou de voie.

14. Agencement comprenant un dispositif (11) d'émission, un dispositif (12) de protection d'accès du côté de l'émetteur, un dispositif (22) de protection d'accès du côté du récepteur et un dispositif (21) de réception,
dans lequel
- le dispositif (11) d'émission satisfaisant un niveau de sécurité est constitué pour transmettre au dispositif (12) de protection d'accès du côté de l'émetteur, un télégramme (T), qui est produit par le dispositif (11) d'émission et qui comprend le message (N) et des données (P) de contrôle formées par le message (N),
- le dispositif (12) de protection d'accès du côté de l'émetteur est constitué en outre pour modifier le télégramme (T) et pour transmettre au dispositif (22) de protection d'accès du côté du récepteur le télégramme (T') modifié ensuite par une liaison (30), notamment par un support de transmission non sécurisé potentiellement ou attaquable potentiellement,
- le dispositif (22) de protection d'accès du côté du récepteur est constitué pour traiter le télégramme (T') modifié, et
- le dispositif (21) de réception satisfaisant le niveau de sécurité du dispositif d'émission est constitué pour contrôler le télégramme (T'') traité à l'aide du message (N), qui y contenu, et des données (P) de contrôle, qui y sont contenues, et pour rejeter le message (N) si les données (P) de contrôle ne sont pas corrélées au message (N),
**caractérisé en ce que**
- le dispositif (12) de protection d'accès du côté de l'émetteur est utilisé en plus du dispositif (11) d'émission et une liaison (13) entre le dispositif (11) et le dispositif (12) de protection d'accès du côté de l'émetteur est réalisée d'une manière plus sûre vis-à-vis de manipulations que la liaison (30) mentionnée en premier, le dispositif de protection d'accès du côté de l'émetteur étant constitué pour modifier le télégramme (T) en
- chiffrant, par une clé secrète avec formation de données (P', SC', (Y ; SC)') de codage, les données (P) de contrôle dans l'ensemble ou au moins une partie des données (P) de contrôle, qui contient un code (SC) de sécurité formé avec le message (N) par le dispositif (11) d'émission
- et en remplaçant, dans le télégramme (T), les données (P) de contrôle, qui ont été chiffrées par les données (P', SC', (Y ; SC)') de codage, le message (N) restant non chiffré dans le télégramme (T),
- le dispositif (22) de protection d'accès du côté du récepteur est utilisé en plus du dispositif (21) de réception et une liaison (23) entre le dispositif (22) de protection d'accès du côté du récepteur et le dispositif (21) de réception est réalisée d'une manière plus sûre vis-à-vis de manipulations que la liaison (30) mentionnée en premier, dans lequel le dispositif (22) de protection d'accès du côté du récepteur est constitué pour traiter le télégramme (T') modifié en
- déchiffrant les données (P', SC', (Y ; SC)') de codage et
- remplaçant les données (P', SC', (Y ; SC)') de codage dans le télégramme (T') par les données (P', SC', (Y ; SC)') de codage déchiffrées, et en acheminant le télégramme (T'') traité au dispositif (21) de réception.
